# FASCICULE DE BREVET EUROPEEN

(11) **EP 1 686 278 B1**
(45) Date de publication et mention de la délivrance du brevet: **18.06.2008**
(21) Numéro de dépôt: 06300073.1
(22) Date de dépôt: 26.01.2006
(51) Int. Cl.: F16D 21/06, F16D 13/68

(54) **Système d'embrayage humide mutilple comprenant un flasque d'entraînement à languettes de centrage**
Nasses Mehr-Kupplungssystem umfassend eine Mitnehmerscheibe mit Zentrierungslasche
Wet multiple clutch system comprising drive disc with centring tongues

(30) Priorité: 27.01.2005 FR 0500840
(43) Date de publication de la demande: 02.08.2006
(73) Titulaire: RENAULT S.A.S., 92100 Boulogne Billancourt (FR)
(72) Inventeur: Leleu, Mathieu, 92150 Suresnes (FR); Logez, Marc, 62160 Bully les Mines (FR); Olejniczac, Fabrice, 62530 Hersin Coupigny (FR)

(56) Documents cités:
- EP-A- 1 227 258
- EP-A- 1 464 859
- EP-A- 1 589 244
- US-A1- 2004 055 842

## Description

Cette invention concerne, de manière générale, les systèmes d'embrayage humide multiples destinés à être montés dans une ligne de transmission d'un véhicule automobile entre une unité motrice et une boîte de vitesses.

Plus particulièrement, elle concerne un système d'embrayage comprenant un embrayage extérieur comportant une cloche extérieure adaptée à être associée à un premier arbre d'entrée de la boîte de vitesses, ladite cloche extérieure comprenant une jupe pourvue de cannelures axiales et un flasque d'entraînement, cinématiquement lié à l'unité motrice, entraînant ladite cloche extérieure par l'intermédiaire de crans d'engrènement coopérant avec lesdites cannelures axiales.

### ARRIERE-PLAN TECHNOLOGIQUE

De nombreuses fonctions périphériques peuvent venir se greffer au flasque d'entraînement. Ces fonctions peuvent imposer des contraintes de coaxialité, de rotulage, d'excentricité et de débattement axial du flasque d'entraînement par rapport au carter d'embrayage et différentiel (CED) de la boîte de vitesse.

II convient alors d'assurer un centrage précis et un arrêt axial du flasque d'entraînement par rapport à un élément de la chaîne cinématique de l'embrayage multiple.

Pour permettre des opérations de maintenance portant sur des éléments internes au système d'embrayage humide multiple, la liaison entre le flasque d'entraînement et la cloche extérieure de l'embrayage extérieur doit être démontable.

Selon le document EP 1 422 430, on connaît un système dans lequel le flasque d'entraînement comporte sur le bord de sa paroi frontale des crans en saillie radiale dont certains coopèrent avec le bord externe de la cloche extérieure de l'embrayage extérieur pour centrer le flasque d'entraînement par rapport à ladite cloches. Le centrage entre le flasque d'entraînement et la cloche extérieure de l'embrayage extérieur est ici très court. Le rotulage entre les deux pièces ainsi que l'excentricité à bas régime de rotation sont alors importants et parfois rédhibitoires au regard d'autres fonctions liées au flasque d'entraînement, comme l'étanchéité.

La Demanderesse a connaissance d'une solution dans laquelle le centrage du flasque d'entraînement se fait par rapport à la tôle de support du joint, le flasque d'entraînement et la cloche extérieure de l'embrayage extérieur étant soudés entre eux. Le système de soudage est donc indémontable sans destruction des pièces soudées. De plus l'obtention d'un centrage précis par un processus de soudure est délicate à mettre au point.

Un système d'embrayage humide multiple selon le préambule de la revendication 1 est connu de EP-A-1 227 258.

### OBJET DE L'INVENTION

Afin de remédier aux inconvénients de l'état de la technique, l'invention propose un système d'embrayage humide multiple tel que défini en introduction, dans lequel ledit flasque d'entraînement comprend des languettes décalées axialement par rapport auxdits crans d'engrènement et coopérant avec la face intérieure de la jupe de la cloche extérieure pour centrer ledit flasque d'entraînement par rapport à cette dernière.

Ainsi, avantageusement, grâce à l'invention, on découple les fonctions de centrage et de transmission assurées par le flasque d'entraînement et l'on peut alors rectifier aisément lesdites languettes pour assurer un centrage précis avec la face intérieure, elle aussi rectifiée, de la cloche extérieure de l'embrayage extérieur.

Selon une caractéristique avantageuse du système conforme à l'invention, la cloche extérieure de l'embrayage extérieur et le flasque d'entraînement sont montés l'un sur l'autre avec un ajustement glissant.

Préférentiellement, selon l'invention, le flasque d'entraînement comporte une paroi frontale dans laquelle sont découpées lesdites languettes de centrage.

En particulier, lesdites languettes s'étendent sensiblement parallèlement à la face intérieure de la paroi frontale du flasque d'entraînement et les extrémités libres desdites languettes forment une paroi cylindrique périphérique discontinue de centrage coopérant avec la face intérieure de la jupe de la cloche extérieure de l'embrayage extérieur.

Avantageusement, les cannelures de la cloche extérieure sont formées par un relief cannelé globalement de toute la jupe, mais c'est la face intérieure de ce relief cannelé qui forme les gorges de cannelures coopérant avec les crans d'engrènement du flasque d'entraînement, les extrémités rectifiées desdites languettes coopérant également avec lesdites gorges de cannelures dans une région décalée vers l'intérieur de l'embrayage par rapport à la région de coopération desdits crans d'engrènement.

### DESCRIPTION DETAILLEE D'UN EXEMPLE DE REALISATION

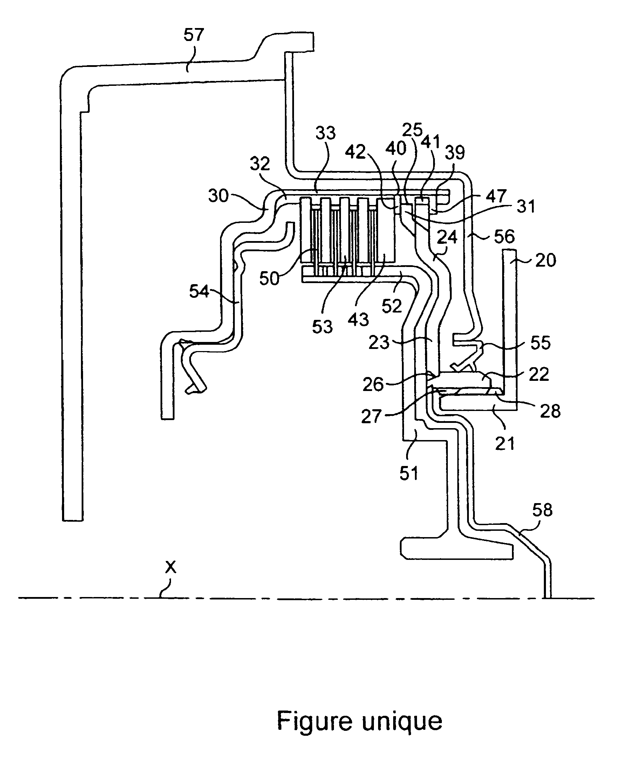

La description qui va suivre en regard du dessin annexé, donné à titre d'exemple non limitatif, fera bien comprendre en quoi consiste l'invention et comment elle peut être réalisée.

Sur le dessin annexé, la figure unique est une vue schématique en demi-coupe partielle d'un système d'embrayage conforme à l'invention.

Sur la figure unique, on a représenté un système d'embrayage humide multiple d'axe X, ici un double embrayage, destiné à être monté dans une ligne de transmission d'un véhicule automobile entre une unité motrice et une boîte de vitesses.

On pourra se reporter au document EP 1 174 633 ou au document FR 2 799 549 pour une description générale et complète d'un double embrayage humide.

Pour les besoins de la présente description, on se contentera de montrer et décrire une partie de l'embrayage extérieur du double embrayage et les principaux organes intervenant dans l'invention, à savoir, le flasque d'entraînement 23 qui entraîne la cloche extérieure 30 de l'embrayage extérieur, laquelle, au travers des ensembles de disques ou lamelles 50, 53, entraîne la cloche intérieure 51 de l'embrayage extérieur.

La puissance de l'unité motrice transite par le moyeu 21 du secondaire de l'amortisseur d'oscillations de torsion 20 et utilise la cannelure 28 de ce moyeu 21 du secondaire coopérant avec la cannelure 27 du moyeu d'embrayage 22 soudé au flasque d'entraînement 23 pour entrer au primaire du double embrayage humide, c'est-à-dire pour entraîner en rotation ledit flasque d'entraînement 23.

Le flasque d'entraînement 23 comporte une paroi frontale 24 formant un disque sensiblement vertical ménageant à l'intérieur une ouverture centrale 26.

Le moyeu d'embrayage 22 est soudé au flasque d'entraînement 23 sur sa paroi frontale 24. Il forme un anneau soudé sur le bord de l'ouverture centrale 26 et présente une surface cylindrique axiale, femelle, cannelée 27 destinée à coopérer avec une surface cylindrique mâle cannelée de la cannelure 28 du moyeu 21 du secondaire de l'amortisseur d'oscillations de torsion 20.

Le flasque d'entraînement 23 transmet la puissance (entraîne en rotation) à la cloche extérieure 30 de l'embrayage extérieur par l'intermédiaire de crans d'engrènement ou cannelures 41 présentes sur la paroi frontale 24 du flasque d'entraînement 23 qui prennent appui sur des cannelures 32 présentes sur la partie cylindrique extérieure ou jupe 33 de la cloche extérieure 30 de l'embrayage extérieur. Les cannelures de la cloche extérieure 30 sont formées par un relief cannelé de toute la jupe 33 (avec éventuellement des interruptions sur certains intervalles), mais c'est la face intérieure de cette surface qui forme les gorges de cannelures coopérant avec les crans d'engrènement 41.

Selon une caractéristique essentielle de la présente invention, ledit flasque d'entraînement 23 comprend des languettes 31 décalées axialement par rapport auxdits crans d'engrènement 41 et coopérant avec la face intérieure de la jupe 33 de la cloche extérieure 30 pour centrer ledit flasque d'entraînement 23 par rapport à cette dernière.

Ces languettes 31 de centrage sont découpées par emboutissage dans ladite paroi frontale 24 du flasque d'entraînement 23 et elle s'étendent sensiblement parallèlement à la face intérieure tournée vers la cloche extérieure 30 de ladite paroi frontale 24, les extrémités des languettes 31 de centrage formant une paroi cylindrique périphérique discontinue de centrage 25 coopérant avec la face intérieure de la jupe 33 de la cloche extérieure 30 de l'embrayage extérieur.

Plus particulièrement, comme le montre la figure, les extrémités libres rectifiées desdites languettes 31 coopèrent avec lesdites gorges de cannelures formées par la face intérieure de la cloche extérieure 30, dans une région décalée vers l'intérieur de l'embrayage par rapport à la région de coopération desdits crans d'engrènement 41.

Le flasque d'entraînement 23 présente alors ici avantageusement deux parois cylindriques périphériques découplées l'une de l'autre qui bordent sa paroi frontale 24, l'une desdites parois cylindriques périphériques étant une paroi discontinue de centrage 25 formée par les extrémités desdites languettes 31 et l'autre étant une paroi continue de transmission de couple crantée ou cannelée 41.

Avantageusement, la cloche extérieure 30 de l'embrayage extérieur et le flasque d'entraînement 23 sont montés l'un sur l'autre avec un ajustement glissant.

La rectification des cannelures intérieures de la cloche extérieure 30 de l'embrayage extérieur associée à la rectification de la paroi cylindrique périphérique discontinue de centrage 25 du flasque d'entraînement 23 permet d'assurer un ajustement précis entre ces deux pièces.

À cet effet, concernant plus particulièrement la rectification du flasque d'entraînement, ainsi décalées axialement par rapport aux crans d'engrènement 41 de transmission de couple, les extrémités des languettes 31 de centrage découplées desdits crans d'engrènement 41 peuvent être aisément rectifiées pour assurer un centrage précis du flasque d'entraînement 23 sur le diamètre intérieur (lui aussi rectifié dans une moindre mesure) de la cloche extérieure 30 de l'embrayage extérieur.

L'anneau d'arrêt axial 47 du flasque d'entraînement 23 prend place dans la gorge d'arrêt 39 de la cloche extérieure 30 de l'embrayage extérieur. Il permet d'offrir une réaction au déplacement axial du flasque d'entraînement 23.

Un ensemble de disques de friction garnis 50, cannelés sur leur diamètre intérieur, sont liés aux cannelures cylindriques 52 de la cloche intérieure 51 de l'embrayage extérieur.

Un ensemble de disques lisses 53, cannelés sur leur diamètre extérieur, sont liés aux cannelures de la cloche extérieure 30 de l'embrayage extérieur.

Un plateau d'appui 43, cannelé sur son diamètre extérieur, est également lié aux cannelures de la cloche extérieure 30 de l'embrayage extérieur.

L'anneau d'arrêt axial 42 du plateau d'appui 43 prend place dans la gorge d'arrêt 40 de la cloche extérieure 30 de l'embrayage extérieur. Il permet d'offrir une réaction à l'effort de compression exercé par le piston 54 sur les disques lisses 53 et les disques de friction garnis 50 afin de transmettre un couple entre la cloche extérieure 30 de l'embrayage extérieur et la cloche intérieure 51 de l'embrayage extérieur.

La cloche intérieure 51 de l'embrayage extérieur assure la sortie de puissance de l'embrayage extérieur du double embrayage humide.

Une tôle de fermeture 58 du flasque d'entraînement 23 est soudée au moyeu d'embrayage 40 dans sa partie inférieure et permet d'assurer l'étanchéité du double embrayage humide.

Un joint d'étanchéité 55 en entrée de boîte est fixé sur une tôle de fermeture 56 liée au carter d'embrayage différentiel 57 et vient frotter sur une piste de frottement aménagée sur le moyeu d'embrayage 22 lié au flasque d'entraînement 23.

La présente invention n'est nullement limitée aux modes de réalisation décrits et représentés.

## Revendications

1. Système d'embrayage humide multiple destiné à être monté dans une ligne de transmission d'un véhicule automobile entre une unité motrice et une boîte de vitesses, ce système comprenant un embrayage extérieur comportant une cloche extérieure (30) adaptée à être associée à un premier arbre d'entrée de la boîte de vitesses, ladite cloche extérieure (30) comprenant une jupe (33) pourvue de cannelures (32) axiales et un flasque d'entraînement (23), cinématiquement lié à l'unité motrice, entraînant ladite cloche extérieure (30) par l'intermédiaire de crans d'engrènement (41) coopérant avec lesdites cannelures (32) axiales, **caractérisé en ce que** ledit flasque d'entraînement (23) comprend des languettes (31) décalées axialement par rapport auxdits crans d'engrènement (41) et coopérant avec la face intérieure de la jupe (33) de la cloche extérieure (30) pour centrer ledit flasque d'entraînement (23) par rapport à cette dernière.

2. Système d'embrayage selon la revendication 1, **caractérisé en ce que** la cloche extérieure (30) de l'embrayage extérieur et le flasque d'entraînement (23) sont montés l'un sur l'autre avec un ajustement glissant.

3. Système d'embrayage selon l'une des revendications 1 ou 2, **caractérisé en ce que** le flasque d'entraînement (23) comporte une paroi frontale (24) dans laquelle sont découpées lesdites languettes (31) de centrage.

4. Système d'embrayage selon la revendication 3, **caractérisé en ce que** lesdites languettes (31) s'étendent sensiblement parallèlement à la face intérieure de la paroi frontale (24) du flasque d'entraînement (23) et les extrémités libres desdites languettes (31) forment une paroi cylindrique périphérique discontinue de centrage (25) coopérant avec la face intérieure de la jupe (33) de la cloche extérieure (30) de l'embrayage extérieur.

5. Système d'embrayage selon l'une des revendications 1 à 4, **caractérisé en ce que** les cannelures (32) de la cloche extérieure (30) sont formées par un relief cannelé globalement de toute la jupe (33), mais c'est la face intérieure de ce relief cannelé qui forme les gorges de cannelures coopérant avec les crans d'engrènement (41) du flasque d'entraînement (23), les extrémités rectifiées desdites languettes (31) coopérant également avec lesdites gorges de cannelures dans une région décalée vers l'intérieur de l'embrayage par rapport à la région de coopération desdits crans d'engrènement (41).

## Claims

1. Wet multiple clutch system intended to be mounted in a driveline of a motor vehicle between a propulsion unit and a gearbox, this system comprising an outer clutch comprising an outer bell housing (30) designed to be associated with a first input shaft of the gearbox, the said outer bell housing (30) comprising a skirt (33) provided with axial splines (32) and a drive flange (23) kinematically linked to the propulsion unit, driving the said outer bell housing (30) via meshing teeth (41) collaborating with the said axial splines (32), **characterized in that** the said drive flange (23) comprises tongues (31) offset axially with respect to the said meshing teeth (41) and collaborating with the interior face of the skirt (33) of the outer bell housing (30) so as to centre the said drive flange (23) with respect to that housing.

2. Clutch system according to Claim 1, **characterized in that** the outer bell housing (30) of the outer clutch and the drive flange (23) are mounted on one another with a sliding fit.

3. Clutch system according to one of Claims 1 and 2, **characterized in that** the drive flange (23) comprises a frontal wall (24) in which the said centring tongues (31) are cut.

4. Clutch system according to Claim 3, **characterized in that** the said tongues (31) run substantially parallel to the interior face of the frontal wall (24) of the drive flange (23) and the free ends of the said tongues (31) form a discontinuous peripheral cylindrical centring wall (25) collaborating with the interior face of the skirt (33) of the outer bell housing (30) of the outer clutch.

5. Clutch system according to one of Claims 1 to 4, **characterized in that** the splines (32) of the outer bell housing (30) are formed by a generally splined relief of the entire skirt (33), but it is the interior face of this splined relief that forms the female splines that collaborate with the meshing teeth (41) of the drive flange (23), the ground ends of the said tongues (31) also collaborating with the said female splines in a region offset towards the inside of the clutch with respect to the region in which the said meshing teeth (41) collaborate.

## Patentansprüche

1. Mehrfachnasskupplungssystem, das dazu bestimmt ist, in einem Kraftübertragungsstrang eines Kraftfahrzeugs zwischen einer Antriebseinheit und einem Getriebe angebracht zu werden, wobei dieses System eine äußere Kupplung enthält, die eine äußere Glocke (30) aufweist, die dazu ausgelegt ist, mit einer ersten Antriebswelle des Getriebes verbunden zu werden, wobei die äußere Glocke (30) einen Mantel (33), der mit axialen Rillen (32) versehen ist, und einen Mitnahmeflansch (23), der mit der Motoreinheit kinematisch verbunden ist und die äußere Glocke (30) über Zahnungskerben (41) antreibt, die mit den axialen Rillen (32) zusammenwirken, aufweist, **dadurch gekennzeichnet, dass** der Mitnahmeflansch (23) Zungen (31) aufweist, die in Bezug auf die Zahnungskerben (41) axial versetzt sind und mit der inneren Fläche des Mantels (33) der äußeren Glocke (30) zusammenwirken, um den Mitnahmeflansch (23) in Bezug auf diese Letztere zu zentrieren.

2. Kupplungssystem nach Anspruch 1, **dadurch gekennzeichnet, dass** die äußere Glocke (30) der äußeren Kupplung und der Mitnahmeflansch (23) aneinander mit einem Gleitsitz angebracht sind.

3. Kupplungssystem nach einem der Ansprüche 1 oder 2, **dadurch gekennzeichnet, dass** der Mitnahmeflansch (23) eine vordere Wand (24) aufweist, in der die Zentrierungszungen (31) ausgeschnitten sind.

4. Kupplungssystem nach Anspruch 3, **dadurch gekennzeichnet, dass** sich die Zungen (31) im Wesentlichen parallel zur inneren Fläche der vorderen Wand (24) des Mitnahmeflansches (23) erstrecken und die freien Enden der Zungen (31) eine unterbrochene, zylindrische Zentrierungsumfangswand (25) bilden, die mit der inneren Fläche des Mantels (33) der äußeren Glocke (30) der äußeren Kupplung zusammenwirkt.

5. Kupplungssystem nach einem der Ansprüche 1 bis 4, **dadurch gekennzeichnet, dass** die Rillen (32) der äußeren Glocke (30) durch ein insgesamt gerilltes Relief des gesamten Mantels (33) gebildet sind, wobei jedoch die innere Fläche dieses gerillten Reliefs die Nuten der Rillen bildet, die mit den Verzahnungskerben (41) des Mitnahmeflansches (23) zusammenwirken, wobei die zugespitzten Enden der Zungen (31) außerdem mit den Rillennuten in einem Bereich zusammenwirken, der in Bezug auf den Zusammenwirkungsbereich der Verzahnungskerben (41) in der Kupplung nach innen versetzt ist.
